# EUROPEAN PATENT APPLICATION

(11) **EP 3 210 812 A1**
(43) Date of publication of application: **30.08.2017**
(21) Application number: 15853174.9
(22) Date of filing: 16.10.2015
(51) Int. Cl.: B60K 35/00, G02B 27/01

(54) **HEAD-UP DISPLAY APPARATUS**

(30) Priority: 20.10.2014 JP 2014213783
(71) Applicant: Nippon Seiki Co., Ltd., Nagaoka-shi, Niigata 940-8580 (JP)
(72) Inventor: TAKADA,Hidehisa, Nagaoka, Niigata (JP); OGURO,Yuji, Nagaoka, Niigata (JP); OGASAWARA,Yukio, Nagaoka, Niigata (JP)
(74) Representative: Carpmaels & Ransford LLP
(86) International application number: PCT/JP2015/079326
(87) International publication number: WO 2016/063807

(57) **Abstract**

Provided is a head-up display (HUD) apparatus capable of preventing dust etc. from entering via an exit port, with a simple configuration. The HUD apparatus is provided with a chassis that has an exit port (11a) from which display light from an indicator is emitted to the outside; a combiner (40) that displays a virtual image upon receiving the display light; a storage mechanism that makes the combiner (40) transit from one of a projecting state and a stored state to the other state by means of a link mechanism that is operated through the movement of a slider (56); a lid (60) that opens and closes the exit port (11a); and a lid supporting part (70) that is provided so as to be rotatable with respect to the chassis (10), one of the ends of which, with the center of rotation therebetween, supports the lid (60), and the other end of which is brought into contact with the slider (56). With the slider (56), the lid (60) opens and closes according to the rotation of the lid supporting part (70) in conjunction with the transition of the combiner (40) from one of the projecting state and the stored state to the other.

## Description

### TECHNICAL FIELD

The present invention relates to a head-up display apparatus.

### BACKGROUND ART

As a conventional head-up display apparatus (hereinafter, referred to as an HUD apparatus), there is the one that is disclosed in Patent Literature 1. This HUD apparatus is configured to be able to store a combiner which receives display light and then display an image in a casing by a storage mechanism which employs a link.

### CITATION LIST

### PATENT LITERATURE

Patent Literature 1: Japanese Unexamined Patent Application Publication No. 2014-125131

### SUMMARY OF THE INVENTION

### PROBLEMS TO BE SOLVED BY THE INVENTION

In the HUD apparatus of such type, an exit port to emit display light to a casing is provided and thus there is an apprehension that the entry of dust or the like via the exit port leads to degradation of an internal mechanism. In order to prevent such degradation, a lid which is capable of opening or closing the exit port may be provided; and however, if an actuator exclusively used to open or close the lid is newly provided, it may lead to complication of the apparatus.

The present invention has been made in view of the circumstance described above, and it is an object of the present invention to provide a head-up display apparatus which is capable of preventing dust or the like from entering via the exit port, with a simple configuration.

### MEANS FOR SOLVING THE PROBLEM

In order to achieve the above object, a head-up display apparatus according to the present invention comprising:
a display to emit display light which is representative of a picture and then emit the display light from the display outside;
a casing to store the display inside, having a casing to emit the display from the display outside;
a combiner to receive the display light that has been emitted from the exit port and then display a virtual image of the picture;
storage means having a slider to move inside of the casing, for transiting the combiner from one state to another state between a protruding state in which the casing has protruded from the casing and a stored state in which the combiner has been stored in the casing, by a link mechanism which operates in conjunction with movement of the slider;
a lid to release the exit port in an open state or cover the exit port in a closed state; and
a lid supporting part which is provided to be rotatable with respect to the casing, the lid supporting part supporting the lid at a first portion, in which a second portion located so as to be opposite to the first portion with a rotation center being sandwiched is brought into contact with the slider,
wherein, when the slider moves in a predetermined direction, the combiner is transited from the protruding state to the stored state, and the lid is transited from the open state to the closed state in accordance with rotation of the lid supporting part, and
wherein, when the slider moves in an opposite direction to the predetermined direction, the combiner is transited from the stored state to the protruding state, and the lid is transited from the closed state to the open state in accordance with the rotation of the lid supporting part.

### EFFECT OF THE INVENTION

According to the present invention, it is possible to prevent dust or the like from entering via an exit port, with a simple configuration.

### BRIEF DESCRIPTION OF THE DRAWINGS

[Fig. 1] Fig. 1 is a perspective view in an open state of a head-up display (HUD) apparatus according to an embodiment of the present invention.
[Fig. 2] Fig. 2 is a partial sectional view in the open state of the HUD apparatus according to the embodiment of the present invention.
[Fig. 3] Fig. 3 is an exploded view of essential parts of the HUD apparatus according to the embodiment of the present invention.
[Fig. 4] Fig. 4 is a schematic view for explaining a four-joint link mechanism included in the HUD apparatus according to the embodiment of the present invention.
[Fig. 5] Fig. 5 is a schematic view for explaining a plate spring according to an embodiment of the present invention.
[Fig. 6] Fig. 6 is sectional perspective view for explaining an opening or closing operation of a lid of the HUD apparatus according to the embodiment of the present invention, wherein Fig. 6 (a) shows an open state and Fig. 6 (b) shows a closed state.
[Fig. 7] Fig. 7 is a partial sectional view of the HUD apparatus according to the embodiment of the present invention, wherein Fig. 7 (a) is a view showing a process of transition from the open state to the closed state and Fig. 7 (b) is a view showing the closed state.

### MODE FOR CARRYING OUT THE INVENTION

An HUD apparatus according to an embodiment of the present invention will be described with reference to the drawings.

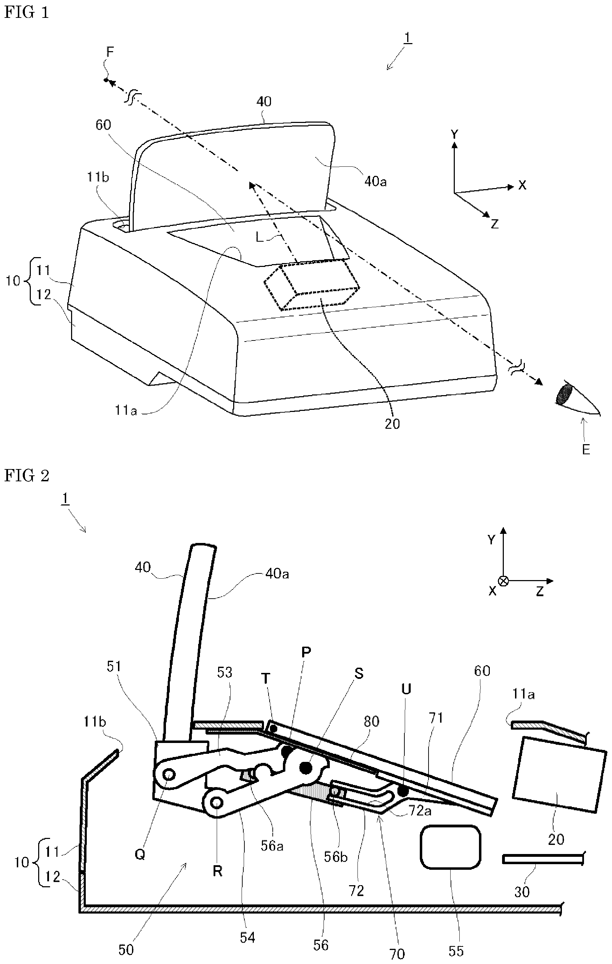

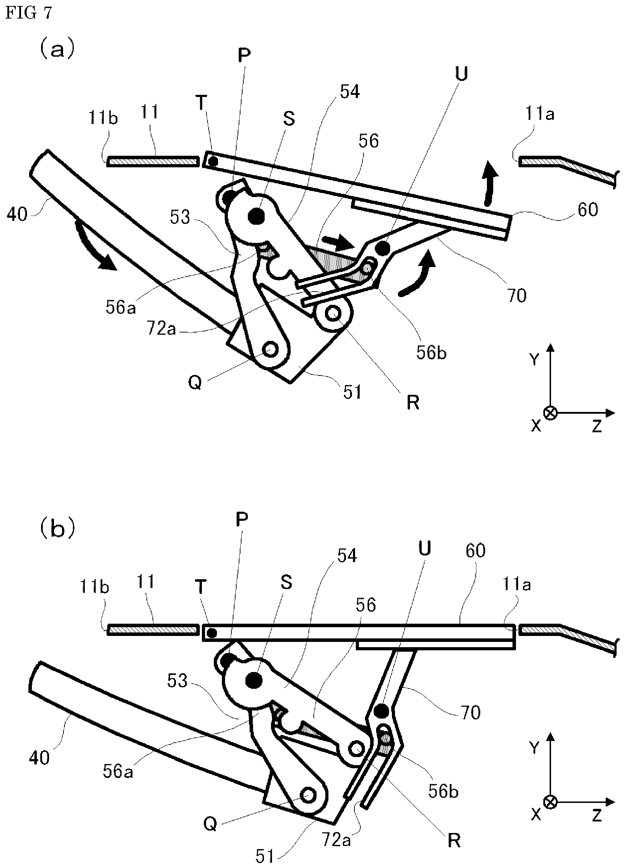

An HUD apparatus 1, as shown in Fig. 1 to Fig. 7(a) and Fig. 7 (b), is provided with a casing 10, a display 20, a circuit board 30, a combiner 40, a storage mechanism 50, a lid 60, a lid supporting part 70, and a plate spring 80. Incidentally, the storage mechanism 50 is an example of storage means, and the plate spring 80 is an example of biasing means.

The HUD apparatus 1 is arranged on a dashboard of a vehicle, for example, and projects display light L from the display 20 to the combiner 40 to thereby display an image, which is represented by the display light L, as a virtual image. This image notifies, to a user (mainly, a driver), information such as a cruising vehicle speed pertinent to a vehicle in which the apparatus is mounted or vehicle information which is indicative of route guidance information employing a known car navigation system. Namely, the vehicle information includes various items of information for assisting drive as well as information pertinent to the vehicle owned by the user.

Incidentally, for the sake of a clear understanding of the configuration, as seen from a viewer E (refer to Fig. 1) who visually recognize an image which is displayed by the HUD apparatus 1, the axis along the transverse direction is defined as the X-axis; the axis along the vertical direction is defined as the Y-axis; and the axis that is orthogonal to the X-axis and the Y-axis is defined as the Z-axis, and the constituent elements constituting the HUD apparatus will be described appropriately. In addition, the direction pointed by the arrow that is indicative of each of the X-axis, Y-axis, and Z-axis is defined as the positive (+) direction in each axis and the opposite direction thereto is defined as the negative direction (-).

The casing 10 is composed of an upper case 11 and a lower case 12 which are linked with each other, and internally stores the constituent elements (the display 20 to the lid supporting part 70). (Incidentally, the combiner 40 is stored while in a storage state which will be described later). In the upper case 11, an exit port 11a and an insertion port 11b are formed. The exit port 11a is an opening through which the display light L from the display 20 is routed (emitted) to the outside of the casing 10. The insertion port 11b is an opening which is required to set the combiner 40 in a protruding state which will be described later. Inside of the lower case 12, the circuit board 30 and a storage mechanism casing 32 which will be described later are fixed by a predetermined method.

The display 20 displays an image which is representative of vehicle information to thereby emit the display light L that is representative of the image. The display 20 is composed of a transmission-type liquid crystal display or a self-emission type display which is composed of a liquid crystal panel and a light source for backlight, for example. The display 20 is arranged at a predetermined position in the casing 10 so as to oppose to the combiner 40 that is in the protruding state. The display light L that has been emitted from the display 20 passes through the exit port 11a and travels to the combiner 40.

The circuit board 30 is a printed circuit board on which a control part (not shown) to control entire operation of the HUD apparatus 1 has been implemented. The control part is provided with: a CPU (Central Processing Unit); a storage part which consists of a ROM (Read Only Memory) and a RAM (Random Access Memory) or the like; and a driver to drive a motor 55 (Fig. 2) which will be described later. In the storage part, an operation program which is indicative of the CPU processing procedures or image data or the like to be displayed on the display 20 are stored in advance. The circuit board 30 is connected by an FPC (Flexible Printed Circuit) or the like to each of the display 20, a motor 55, and position detection means (which will be described later). The control part serves to: (i) cause the display 20 to display an image which is indicative of predetermined vehicle information, based on various items of vehicle information that has been acquired from an ECU (Electronic Control Unit) or the like of the vehicle; (ii) drive the motor 55 in accordance with an operation signal from an operation part which will be described later to move a slider 56 which will be described later); and (iii) determine a position of the combiner 40, based on a detection signal from a position detection means which will be described later.

The combiner 40 is composed of a plate-shaped half mirror having a curved surface; and a hologram element or the like. The combiner 40 is transited from one state to the other state between: a state in which the combiner has protruded from the casing 10 (hereinafter, referred to as a "protruding state"); and a state in which the combiner has been stored in the casing 10 (hereinafter, referred to as a "stored state"), in accordance with operation of the storage mechanism 50 which will be described later.

Although later described in detail, when the combiner 40 is transited from the protruding state to the stored state, the lid 60 that opens or closes the exit port 11a is conjunctively transited from the open state to the closed state as well. This also applies to a transition to the reverse side, similarly. Namely, in the HUD apparatus 1 according to the embodiment, when the combiner 40 is established in the protruding state, the lid 60 is established in the open state or when the combiner 40 is established in the stored state, the lid 60 is established in the closed state. Incidentally, the case in which the lid 60 is established in the open state is expressed as the HUD apparatus 1 being in the open state as well. This also applies to the case of the closed state, similarly.

The combiner 40 that is in the protruding state, as shown in Fig. 1 and Fig. 2, is established in a posture protruding upward from the insertion port 11b of the casing 10. Incidentally, Fig. 2 is a partial sectional view in a case where the casing 10 has been cut on a predetermined plane parallel to the YZ-plane, and is also a view in a case where an internal mechanism of the casing 10 is seen from the left side face (this also applies to Fig. 7 (a) and Fig. 7 (b), similarly).

The combiner 40 that is in the protruding state, on a concave surface 40a (the surface approximately facing the +Z-axis), receives the display light L that has been emitted by the display 20 and then varies an optical path of the display light L that has been incident thereto. Incidentally, in a case where a half mirror is employed as the combiner 40, the optical path of the display light L is varied by means of reflection or in a case where a hologram element is employed, the optical path of the display light L is varied by means of diffraction. The concave surface 40a of the combiner 40 is configured as a concave surface which has a function of focusing the display light L, and which is capable of forming a virtual image at a front distal side more significantly than the case in which the light is simply reflected (for example, about 1 m front side more significantly than the combiner 40). The combiner 40 forms a virtual image of the image indicated by the display light L at the front position F (Fig. 1) and causes the light from the front side to pass through. In this manner, the HUD apparatus 1 is capable of causing the viewer E to visually recognize the image that has been displayed as the virtual image while being overlapped on a real landscape.

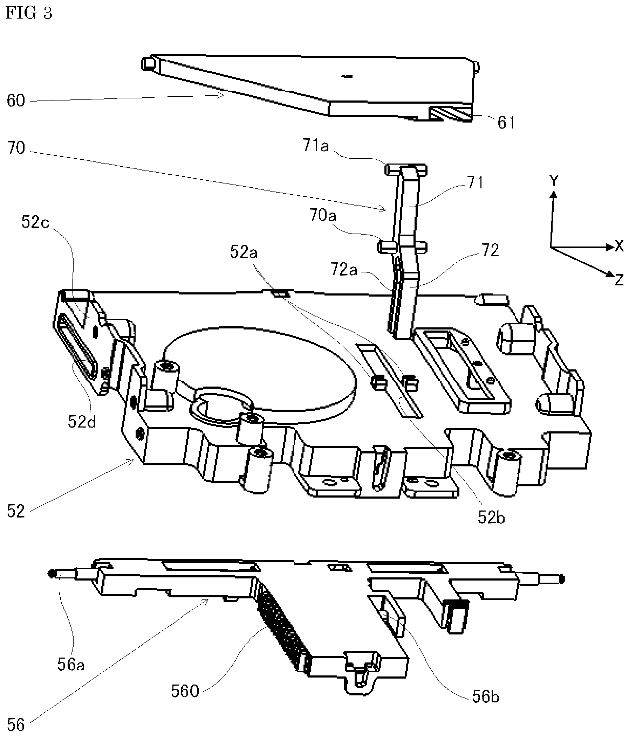

The storage mechanism 50 shown in Fig. 3 is a mechanism to transit the combiner 40 from one state to the other state between the protruding state and the stored state. The storage mechanism 50 is provided with a holder 51, a storage mechanism casing 52, a first connecting part 53; a second connecting part 54, a motor 55, and a slider 56.

The holder 51 is for holding the combiner 40. The holder 51 is a columnar member extending in the X-direction, and is formed of a resin material, for example. The combiner 40 is held with one end part thereof (a lower end part in the protruding state) being fixed to the holder 51.

The storage mechanism casing 52 is fixed to the inside of the casing 10, and is immobilized with respect to the casing 10. The storage mechanism casing 52 is formed of a resin material, for example, and as shown in Fig. 3, has: a supporting part 52a to rotatably support the lid supporting part 70; an opening 52b which is provided so as not to block a rotation movement of the lid supporting part 70; and a side part 52c having a plane which is substantially parallel to the YZ plane. The first connecting part 53 and the second connecting part 54 are mounted to the side part 52c. In addition, a first contact part 56a (which will be described later) of the slider 56 is inserted into the side part 52c, and a hole 52d to expose the first contact part 56a to the outside of the storage mechanism casing 52 is formed. The hole 52d is formed so as to approximately extend in the Z-direction in association with a movement range of the slider 56. In addition, the motor 55 is arranged at a predetermined position of the storage mechanism casing 52.

The first connecting part 53 is a rod-shaped member which is rotatably provided in the storage mechanism casing 52 and which links the storage mechanism casing 52 and the holder 51 with each other, and is formed of a resin material, for example. The first connecting part 53, at one end part thereof, is mounted to the side part 52c of the storage mechanism casing 52 so as to be rotatable about a shaft P parallel to the X-axis. In addition, the first connecting part 52, at the other end part thereof, supports the holder 51 to be rotatable about a shaft Q parallel to the X-axis. For example, at the side part 52a, a convex part along the shaft P is formed, and at one end part of the first connecting part 53, a concave part to engage with the convex part is formed, and the first connecting part 53 is thereby made rotatable about the shaft P. In addition, at the holder 51, a convex part along the shaft Q is formed, and at the other end part of the first connecting part 53, a concave part which engages with the convex part is formed, and the holder 51 is thereby made rotatable with respect to the first connecting part 53 about the shaft Q. A relationship between these concave and convex parts may be reversal from each other. Incidentally, in respect of each member which is made rotatable about a respective one of axes S, R, T, and U which will be described later as well, a relationship between a mounting side and a mounted side is established similarly; and therefore, a description of how each member is rotatably mounted is omitted here. In the light of the foregoing descriptive matters, it is possible to say that the first connecting part 53 is linked with the storage mechanism casing 52 by joints around the shaft P. In addition, in respect of the axes Q, R, and S about the respective joints of the four-joint link mechanism which will be described later as well, the joints to link the respective members with each other are configured similarly, and the joints present about the respective shafts has one degree of freedom. Incidentally, in Fig. 2, Fig. 4, Fig. 7 (a) and Fig. 7 (b), the shafts P, S, T, and U that were immobilized with respect to the casing 10 were represented by the filled circle, and the shafts Q and R to move with respect to the casing 10 were represented by the contour circle.

The second connecting part 54 is a member which is rotatably provided in the storage mechanism casing 52 and which links the storage mechanism casing 52 and the holder 51 with each other, and is formed of a resin material, for example. The second connecting part 54 is provided so as to be paired with the first connecting part 53, and is located at a lower side more significantly than the first connecting part 53 that is in the protruding state of the combiner 40. The second connecting part 54, at one end part thereof, is mounted to the side part 52c of the storage mechanism casing 52 so as to be rotatable about the shaft S parallel to the X-axis. In addition, the second connecting part 54, at the other end part thereof, supports the holder 51 to be rotatable about the shaft R parallel to the X-axis.

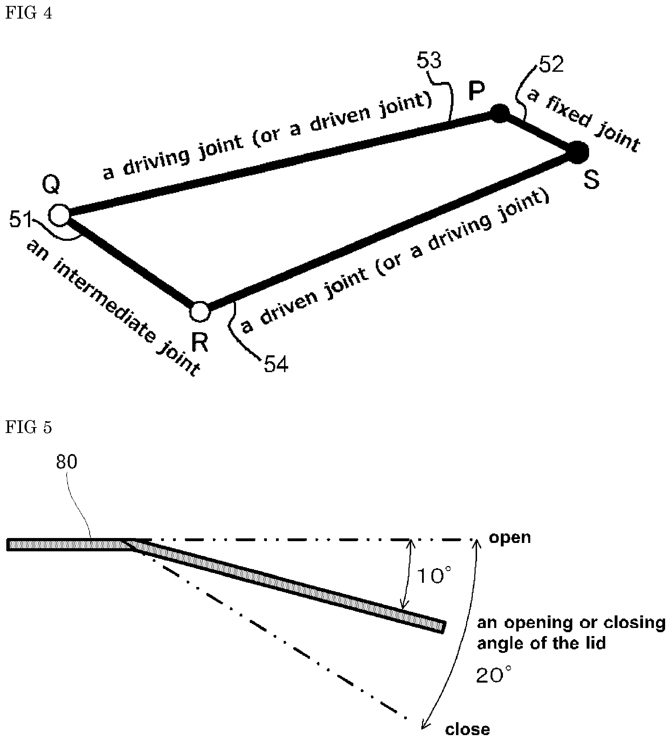

The storage mechanism 50 moves the combiner 40 by the four-joint link mechanism to transit the combiner from one state to the other state between the protruding state and the stored state. The four-joint link mechanism is known as a mechanism which consists of: a driving joint (a driving link) which communicates with a fixed joint (a fixed link) and one of the joints that are positioned at both ends of the fixed joint, to which a driving force is to be imparted; and an intermediate joint (an intermediate link) which communicates with a driven joint (a driven link) opposing to the driving joint, and which connects the driving joint and the driven joint to each other. In association with this configuration, the four-joint link mechanism included in the storage mechanism 50 is configured so that: a part of the storage mechanism casing 52 (specifically, a joint connecting the respective centers of the shaft P and the shaft Q to each other) function as a fixed joint; either one of the first connecting part 53 and the second connecting part 54 functions as a driving joint to which a driving force is to be imparted by the slider 56; the other one functions as a driven joint; and the holder 51 functions as an intermediate joint (refer to Fig. 4). In the four-joint link mechanism thus configured, when the combiner is transited from the stored state to the protruding state, the first connecting 52 functions as a driving force to which a driving force is to be imparted by the slider 56, and the second connecting part 54 functions as a driven joint. In addition, when the combiner 40 is transited from the protruding state to the stored state, the second connecting part 54 functions as a driving joint to which a driving force is to be imparted by the slider 56 and the first connecting part 53 functions as a driven joint. A specific operation will be described later.

Hereinabove, mainly referring to Fig. 2, the four-joint link mechanism in a case where the internal mechanism of the HUD apparatus 1 is seen from a right side face was described; and however, the HUD apparatus 1 is configured to be approximately transversely symmetrical, and at the right side thereof, a four-joint link mechanism having a first connecting part and a second connecting part or the like is configured similarly as well. Namely, the HUD apparatus 1 moves the combiner 40 by the four-joint link mechanism that operates similarly at each of the left and right sides. Thus, a detailed description of the four-joint link mechanism at the right side is omitted here.

The motor 55 shown in Fig. 2 imparts, to the slider 56, a driving force for moving in the longitudinal direction. The motor 55 rotates a driving shaft under the control of the control part. A gear is pressed in the driving shaft of the motor 55. This gear indirectly meshes with a gear 560 (Fig. 3) which is formed at the slider 56. The gear 560 is formed in the shape of a helical gear which is approximately taken along the Z-direction. With such a configuration, a rotation driving force of the motor 55 is transmitted to the slider 56, and the slider 56 moves in the longitudinal direction.

Incidentally, at a predetermined portion of the storage mechanism casing 52, position detection means (not shown) is arranged to thereby able to detect whether the combiner 40 is established in the protruding state or the stored state. The position detection means is composed of: a linear potentiometer to detect a position in the longitudinal direction of the slider 56; and a rotary potentiometer to detect a rotation angle at the periphery of the shaft P of the first connecting part 53 or the shaft S of the second connecting part 54 or the like. The position detection means supplies, to the control part, a detection signal which is indicative of position information in a case where the slider 56 is located at a predetermined position. The control part determines, based on this detection signal, whether the combiner 40 is established in the protruding state or the stored state.

The slider 56 is provided to be slidable with respect to the storage mechanism casing 52, and is moved in the longitudinal direction by the driving force of the motor 55. The slider 56 has: a first contact part 56a which is brought into contact with the first connecting part 53 or the second connecting part 54 according to its movement; and a second contact part 56b (an example of sliding part) which is brought into contact with the lid supporting part 70).

The first contact part 56a is a portion which protrudes to the outside of the storage mechanism casing 52 through a hole 52d of the storage mechanism casing 52. A tip end of the first contact part 56a is located between the first connecting part 53 and the second connecting part 54. The first contact part 56a is formed in a columnar shape having a height in the X-axis direction, and is formed of a slidable resin such as polyacetal (POM (Polyoxymethylene)) resin.

The first contact part 56a, at a tip end thereof, presses and moves the first connecting part 53 or the second connecting part 54 to thereby drive the four-joint link mechanism. Namely, by the first contact part 56a, a driving force is imparted to the four-joint link mechanism. Specifically, when the first contact part 56a presses the first connecting part 53 forward owing to a forward movement of the slider 56, the pressed first connecting part 53 rotates clockwise about the shaft P (hereinafter, referred to as "CW (Clock Wise) rotation"), and in accordance with this rotation, the second connecting part 54 rotates clockwise about the shaft S as well. Namely, in a case where the slider 56 moves forward, the first connecting part 53 functions as a driving joint and the second connecting part 54 functions as a driven joint. The four-joint link mechanism that operates in this manner moves the combiner 40 in the projecting direction. On the other hand, when the first contact part 56a presses the second connecting part 54 backward owing to a backward movement of the slider 56, the pressed second connecting part 54 rotates counterclockwise about the shaft S (hereinafter, referred to as "CCW (Counter Clock Wise) rotation"), and in accordance with this rotation, the first connecting part 53 rotates clockwise about the shaft P as well. Namely, in a case where the slider 56 moves backward, the second connecting part 54 functions as a driving joint and the first connecting part 53 functions as a driven joint. The four-joint link mechanism that operates in this manner moves the combiner 40 in the stored direction. Incidentally, the terms "CW rotation" and "CCW rotation" used herein respectively denote the rotation directions in a case where the HUD apparatus 1 is seen from the left side. For the sake of a clear understanding of explanation, this also applies to the following description, similarly.

The second contact part 56b, as shown in the exploded view of Fig. 3, is located at a lower side of the opening 52b of the storage mechanism casing 52. The second contact part 56b gets into a guiding part 72a (which will be described later) of the lid supporting part 70. The second contact part 56b is formed in a columnar shape having a height in the X-axis direction, and is formed of a sliding resin such as a PM resin. The second contact part 56b slides inside of the guiding part 72a in conjunction with movement of the slider 56 to thereby rotate the lid supporting part 70. The lid 60 opens or closes according to the rotation movement of the lid supporting part 70. A detailed description of operation will be given later.

The lid 60 releases the exit port 11a in the open state and covers the exit port 11a in the closed state. As described later, the lid 60 moves together with the combiner 40 and is established in the open state when the combiner 40 is established in the protruding state or is established in the closed state when the combiner 40 is established in the stored state. In this manner, when the HUD apparatus 1 is not in use, it is possible to prevent the entry of dust or the like to the inside.

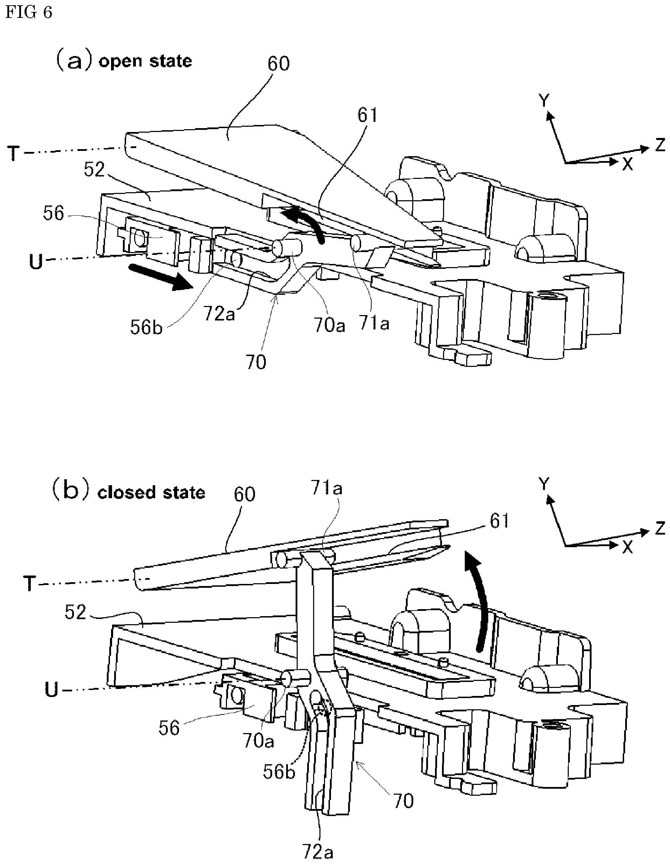

The lid 60 is mounted to an opening end of the upper case 11 (the combiner 40 side) so as to be rotatable about the shaft Y parallel to the X-axis. Also, a slider 71a (which will be described later) of the lid supporting part 70 is engaged with the lid 60, and a sliding passage 61 is provided to slide the slider 71a according to the rotation of the lid supporting part 70 and then vary a supporting position of the lid 60. The sliding passage 61, as shown in Fig. 6 (a) and Fig. 6 (b), is a groove-shaped portion formed along the direction in which the lid 60 extends.

The lid supporting part 70 is a rod-shaped member, and supports the lid 60. The lid supporting part 70 has a shaft part 70a which is rotatably supported by the supporting part 52a of the storage mechanism casing 52 so as to be thereby rotatable about the shaft U parallel to the X-axis with respect to the storage mechanism casing 52. The lid supporting part 70 supports the lid 60 at the first portion 71 that is upper than the shaft part 70a. Also, a second portion 72 which is lower than the shaft part 70a of the lid supporting part 70 passes through the opening 52b of the storage mechanism casing 52, and is located at a lower side.

At a tip end of the first portion 71, a columnar slider 71a protruding to the left and right is formed. The slider 71a is slidably engaged with the sliding passage 61 of the lid 60.

The second contact part 56b of the slider 56 is slidably engaged with the second portion 72, and the guiding part 72a to gradually vary the opening or closing speed of the lid 60 is formed.

The guiding part 72a, in a side view as shown in Fig. 2, is formed in a U-shape, one end of which is an open end and which is folded in the middle leading from one end to the other end. At the time of assembling, the second contact part 56b of the slider 56 is inserted into the guiding part 72a from the open end. The guiding part 72a is formed as a groove which is depressed in the X-direction or as a hole which penetrates the second portion 72 in the X-direction. As shown in Fig. 2 and Fig. 6(a), the second contact part 56b is slidably inserted so as to be sandwiched by the guiding part 72a. The guiding part 72a has: a parallel part extending in parallel to the movement direction of the slider 56 backward from the open end side in the protruding state of the combiner 40 shown in Fig. 2; and an inclined part to incline from the parallel part towards the shaft U. In addition, at the inclined part, a curved surface to gradually vary the opening or closing speed of the lid 60 (the curved shape in the side view of Fig. 2) is formed. A description will be given later with respect to how this curved surface gradually varies the opening or closing speed of the lid 60.

The plate spring 80 is formed of a metal, for example, and is formed to be foldable. The plate spring 80, as shown in Fig. 2, is provided so that a folded portion is located at a lower side of the shaft T that is a rotation center of the lid 60, one side of which is fixed to the upper case 11 with the folded portion being sandwiched, and the other side of which is fixed to the lid 60 as well. Here, as shown in Fig. 5, a folding angle of the plate spring 80 is substantially half (including just half) of an opening or closing angle of the lid 60. For example, as shown in the figure, in a case where the opening or closing angle of the lid 60 is set to 20 degrees, the folding angle of the plate spring 80 is obtained as 10 degrees. The thus folded plate spring 80 biases the lid 60 that is in the open state, along the direction approaching towards the closed state, whereas the spring biases the lid 60 that is in the closed state, along the direction approaching towards the open state. In this manner, it is possible to prevent a backlash at the time of opening or closing of the lid 60 owing to elasticity of the plate spring 80, and it is also possible to assist startup of the motor 55.

Hereinabove, a structure of the HUD apparatus 1 has been described so far. Next, a transition of the combiner 40 in the HUD apparatus 1 and the opening or closing operation of the lid 60 will be described.

For example, at a predetermined part of the HUD apparatus 1 or on a dashboard of a vehicle, an operation part which consists of a button or the like is provided, and when the user (usually, the viewer E) depressed this button, an operation signal which is indicative of the contents of operation is supplied to the control part. The control part that has responded to the operating signal drives the motor 55 to thereby move the combiner 40 via the slider 56. Specifically, the control part rotates a driving shaft of the motor 55 at a constant speed and in the rotation direction according to the operation signal. The rotation driving force of the motor 55 is transmitted to the slider 56 via a plurality of gears and then the slider 56 moves in the longitudinal direction.

First of all, a description will be given with respect to a case in which the HUD apparatus 1 is transited from the open state shown in Fig. 2 (the protruding state of the combiner 40) to the closed state shown in Fig. 7 (b) (the stored state of the combiner 40). In this case, the slider 56 moves backward. Incidentally, in Fig. 7(c) and Fig. 7 (b), the plate spring 80 is omitted here.

When the first contact part 56a presses the second connecting part 54 backward owing to the backward movement of the slider 56, the pressed second connecting part 54 rotates CCW about the shaft S, and in accordance with this rotation, the first connecting part 53 rotates CCW about the shaft P as well. In this manner, as shown in Fig. 7 (a), the four-joint link operates, and the combiner 40 moves to a lower side so as to be pulled up to the inside through the insertion port 11b of the casing 10. At this juncture, the holder 51 to hold the combiner 40 functions as an intermediate joint to connect the shaft Q and the shaft R to each other; and therefore, the combiner 40 moves to a lower side while rotating CCW in accordance with the rotation operations of the first connecting part 53 and the second connecting part 54. When the combiner 40 moves in this way and then is transited until the stored state shown in Fig. 7(b) is stablished, the detection signal indicative of the fact that the combiner 40 has transited in the stored state, from the position detection means, is supplied to the control part. The control part that has responded to this detection signal stops the operation of the motor 55. In this manner, the transition from the protruding state (Fig. 2) to the stored state (Fig. 7 (b) of the combiner 40 completes.

The HUD apparatus 1 according to the embodiment is characterized in that the lid 60 is transited from the open state to the closed state in conjunction with the transition from protruding state to the stored state of the combiner 40. Hereinafter, the transition of the lid 60 will be described.

In conjunction with the backward movement of the slider 56, as shown in Fig. 6 (a), the second contact part 56b slides the guiding part 72a of the lid supporting part 70 backward. While the second contact part 56b slides the parallel part of the guiding part 72a, the lid supporting part 70 does not start rotation about the shaft U.

In conjunction with the backward movement of the slider 56, as shown in Fig. 7 (a), the combiner 40 moves backward, and in that course, the second contact part 56b is guided to the inclined part from the parallel part of the guiding part 72a towards the shaft U. When the second contact part 56b starts sliding at the inclined part, the inclined part inclines with respect to the movement direction of the slider 56 and then the lid supporting part 70 starts the CCW rotation about the shaft U. In accordance with this rotation, the slider 71a of the lid supporting part 70 moves towards the shaft T side the sliding passage 61 that has been formed at the lid 60 and then varies the position for supporting the lid 60 so as not to block rotation of the lid supporting part 70 (refer to Fig. 6 (a) and Fig. 6 (b)).

In accordance with the variation between the CCW rotation of the lid supporting part 70 and the supporting position of the lid 60 by the slider 71a, the lid 60 rotates CCW about the shaft T and rises and then is transited from the closed state towards the open state.

When the second contact part 56b starts sliding on the curved surface that has been formed at the shaft U side of the inclined part, the rotation speed of the lid supporting part 70 gradually lowers. This curved surface is formed at a curvature to an extent such that action of the second contact part 56 with respect to the lid supporting part 70 (the action in the circumferential direction about the shaft U) gradually weakens. In addition, when the second contact part 56b is located at a terminal end part of the guiding part 72a, the lid 60 is established in the closed state shown in Fig. 6 (b) and Fig. 7 (b).

The curved surface has been thus formed at the guiding part 72a of the lid supporting part 70; and therefore, it is possible to ensure the rotation speed of the lid 60 becomes gentle immediately before the lid 60 is established in the closed state.

On the other hand, when the combiner 40 is transited from the stored state to the protruding state, the HUD apparatus 1 makes operation by reversing the operating procedures as described previously. In a brief description, the first connecting part 53 is pressed forward against the first contact part 56a due to the forward movement of the slider 56, and the four-joint link mechanism thereby operates and then the combiner 40 is transited from the stored state to the protruding state. In this course, the second contact part 56b slides the guiding part 72a of the lid supporting part 70 from the inclined part towards the parallel part. The lid 60 is established in the open state with a timing of the second contact part 56b having arrived at the parallel part from the inclined part. Incidentally, by the curved surface described previously that has been formed at the inclined part, the lid 60 gently rotates CW immediately after the start of the closing operation. Namely, the rotation speed of the lid 60 becomes gentle immediately before the lid 60 is established in the closed state and immediately after the operation from the closed state to the open state has started. In this manner, it is possible to produce a feeling of luxury of the HUD apparatus 1 and increase the value of the product.

In addition, the lid 60 established in the open state is biased along the direction approaching towards the closed state by the plate spring 80 as described previously, whereas the lid 60 established in the closed state is biased along the direction approaching towards the open state. Thus, it is possible to assist startup of the motor 55 when starting the transition of the lid 60 from one state to the other state between the open state and the closed state.

Incidentally, the timing with which the lid 60 is established in the closed state does not need to be the same as the timing with which the transition to the storage state of the combiner 50 has completed. Similarly, the timing with which the lid 60 is established in the open state does not need to be the same as the timing with which the transition to the protruding state of the combiner 40 has completed. It is sufficient if the lid 60 is established in the open state or closed state with an arbitrary timing in the course in which the combiner 40 moves.

The HUD apparatus 1 that consists of the constituent elements described above is provided with: the display 20 to emit display light L which is representative of a picture (an image); the casing 10 to store the display 20 therein, having the exit port 11a to emit the display light L from the display 20 to the outside; the combiner 40 to receive the display light L that has been emitted from the exit port 11a and then display a virtual image of the picture; a storage mechanism 50 (an example of storage means) having the slider 56 which moves inside of the casing 10, for transiting the combiner 40 from one state to the other state between the protruding state and the stored state by the four-joint link mechanism that operates in conjunction with movement of the slider 56; a lid 60 to release the exit port 11a in the open state or cover the exit port 11a in the closed state; and the lid supporting part 70 which is provided to be rotatable with respect to the casing 10, the lid supporting part 70 supporting the lid 60 at a first portion 71, in which a second portion 72 located so as to be opposite to the first portion 71 with a rotation center being sandwiched is brought into contact with the slider 56. When the slider 56 moves in a predetermined direction, the combiner 40 is transited from the protruding state to the stored state, and in accordance with the rotation of the lid supporting part 70, the lid 60 is transited from the open state to the closed state, or alternatively, when the slider 56 moves in the opposite direction to the predetermined direction, the combiner 40 is transited from the stored state to the protruding state, and in accordance with the rotation of the lid supporting part 70, the lid 60 is transited from the closed state to the open state. Specifically, the storage mechanism 50 has: the holder 51 (an example of holding part) to hold the combiner; and a pair of the first connecting part 53 and the second connecting part 54 to connect the casing 10 and the holder 51 to each other, which are provided to be rotatable with respect to the casing 10; and the four-joint link mechanism is characterized in that one of the first connecting part 53 and the second connecting part 54 is configured as a driving mechanism to which a driving force is to be imparted by the slider 56, the other one is configured as a driven joint, the holder 51 is configured as an intermediate joint, a joint to connect the respective rotation centers (shaft P and shaft S) of the first connecting part 53 and the second connecting part 54 to each other is configured as a fixed joint. In this manner, the HUD apparatus 1 was configured to be able to open or close the lid 60 in conjunction with the movement of the combiner 40; and therefore, there is no need to provide an actuator exclusively used for the opening or closing operation of the lid 60 and a simple configuration is accomplished. In addition, when the HUD apparatus 1 is not in use, the exit port 11a is covered (closed); and therefore, it is possible to prevent entry of dust or the like to the inside.

In addition, the HUD apparatus 1 is further provided with a plate spring 80 (an example of biasing means) to bias the lid 60 established in the open state, along the direction approaching towards the closed state, and to bias the lid 60 established in the closed state, along the direction approaching towards the open state. Specifically, the plate spring 80 is formed to be foldable, one portion of which is fixed to the casing 10 with a folded portion being sandwiched, and the other portion of which is fixed to the lid 10. In this manner, as described previously, it is possible to prevent a backlash at the time of opening or closing of the lid 60 and to assist startup of the motor 55.

Further, the slider 56 has the second contact part 56b (an example of sliding part) to slide the second portion 72 of the lid supporting part 70, and at the second portion 72, the guiding part 72a to guide and slide a second contact part 56b, having a curved surface to gradually vary the opening or closing speed of the lid 60, is formed. In this manner, as described previously, it is possible to reduce the rotation speed of the lid 60 immediately before the lid 60 is established in the closed state and immediately after the operation from the closed state to the open state has been started, and it is also possible to increase the value of the product.

Incidentally, the present invention is limited by the embodiment and drawings. Of course, modifications (including deletion of constituent element(s) can be applied to the embodiment and drawings.

Although the foregoing description showed an example of a configuration in which the first contact part 56a of the slider 56 is located between the first connecting part 53 and the second connecting part 54 to drive the four-joint link mechanism, the present invention is not limitative thereto. What is provided instead thereof may be a configuration in which the first contact part 56a presses either one of the first connecting part 53 and the second connecting part 54 in a predetermined direction, and an elastic member to bias the first connecting part 53 or the second connecting part 54 is provided in an opposite direction to the predetermined direction. In addition, although the foregoing description shows an example in which the combiner 40 is moved by the four-joint link mechanism that operates in conjunction with the movement of the slider 56, the link mechanism may be composed of a three-joint or less link or a five-joint more link.

Although in the foregoing description, the plate spring 80 was employed as an example in which means for biasing the lid 60 established in the open state, along the direction approaching towards the closed state, and biasing the lid 60 established in the closed state, along the direction approaching towards the open state, the present invention is not limitative thereto. Such biasing means may be implemented by employing another elastic member such as a torsion spring, a resin spring, or a rubber solely or using a plurality of elastic members in combination.

Although the foregoing description showed an example of a layout in which the display 20 and the combiner 40 oppose to each other, the present invention is not limitative thereto. For example, it may be that the display 20 is disposed so as to emit the display light L to the +Z-axis direction side, for example, an optical path is returned by a predetermined reflecting member, and the display light L is caused to arrive at the combiner 40.

Although the foregoing description showed an example of employing the motor 55 that is constant in terms of the rotation speed of the driving shaft, the present invention is not limitative thereto. A servomotor or a stepping motor may be employed instead thereof. If the rotation angle of the driving shaft is controlled by these motors, it is possible to adjust the opening or closing speed of the lid 60, without a need to provide a curved surface that varies the opening or closing speed of the lid 60, at the guiding part 72a of the lid supporting part 70. However, in a case where there is a desire to simplify control, it is preferable to provide a curved surface.

Although the foregoing description showed a vehicle as an example of a transportation vehicle in which the HUD apparatus 1 is installed, the present invention is not limitative thereto. It may be that the HUD apparatus 1 is installed in the vicinity of a navigation seat in a ship, a cockpit in an aircraft or a driver's seat in any other transportation vehicle.

In the foregoing description, a description of publicly known technical matters which are not so essential was appropriately omitted for the sake of a clear understanding of the present invention.

### INDUSTRIAL APPLICABILITY

The present invention is preferably suitable for a head-up display apparatus to be mounted on a vehicle.

### DESCRIPTION OF REFERENCE NUMERALS

- 1: Head-up display (HUD) apparatus
- 10: Casing
- 11a: Exit port
- 11b: Insertion port
- 20: Display
- L: Display light
- 30: Circuit board
- 40: Combiner
- 50: Storage mechanism
- 51: Holder
- 52: Storage mechanism casing
- 53: First connecting part
- 54: Second connecting part
- P, Q, R, S: Shafts
- 55: Motor
- 56: Slider
- 56a: First contact part
- 56b: Second contact part
- 60: Lid
- 61: Sliding passage
- 70: Lid supporting part
- 71: First portion
- 71a: Slider
- 72: Second portion
- 72a: Guiding part
- 80: Plate spring

## Claims

1. A head-up display apparatus comprising:
a display to emit display light which is representative of a picture and then emit the display light from the display outside;
a casing to store the display inside, having a casing to emit the display from the display outside;
a combiner to receive the display light that has been emitted from the exit port and then display a virtual image of the picture;
storage means having a slider to move inside of the casing, for transiting the combiner from one state to another state between a protruding state in which the casing has protruded from the casing and a stored state in which the combiner has been stored in the casing, by a link mechanism which operates in conjunction with movement of the slider;
a lid to release the exit port in an open state or cover the exit port in a closed state; and
a lid supporting part which is provided to be rotatable with respect to the casing, the lid supporting part supporting the lid at a first portion, in which a second portion located so as to be opposite to the first portion with a rotation center being sandwiched is brought into contact with the slider,
wherein, when the slider moves in a predetermined direction, the combiner is transited from the protruding state to the stored state, and the lid is transited from the open state to the closed state in accordance with rotation of the lid supporting part, and
wherein, when the slider moves in an opposite direction to the predetermined direction, the combiner is transited from the stored state to the protruding state, and the lid is transited from the closed state to the open state in accordance with the rotation of the lid supporting part.

2. The head-up display apparatus according to claim 1, wherein
the storage means has: a holding part for holding the combiner; and a pair of a first connecting part and a second connecting part to connect the casing and the holding part to each other, and
the link mechanism is a four-joint link mechanism in which one of the first connecting part and the second connecting part is configured as a driving joint to which a driving force is to be imparted by the slider, another one is configured as a driven point, the holding part is configured as an intermediate joint, and a joint to connect respective rotation centers of the first connecting part and the second connecting part to each other is configured as a fixed joint.

3. The head-up display apparatus according to claim 1 or claim 2, further comprising biasing means for biasing the lid established in the open state, along a direction approaching towards the closed state, and biasing the lid established in the closed state, along a direction approaching towards the open state.

4. The head-up display apparatus according to claim 3, wherein
the biasing means is a plate spring which is formed to be foldable, a portion of which is fixed to the casing with a folded portion being sandwiched, and another portion of which is fixed to the lid.

5. The head-up display apparatus according to any one of claims 1 to 4, wherein the slider has a sliding part to slide the second portion of the lid supporting part, and
at the second portion, a guiding part to guide and slide the sliding part, having a curved surface which graduallyvaries an opening or closing speed of the lid, is formed.
